# EUROPÄISCHE PATENTSCHRIFT

(11) **EP 2 257 458 B1**
(45) Veröffentlichungstag und Bekanntmachung des Hinweises auf die Patenterteilung: **07.03.2012**
(21) Anmeldenummer: 09728826.0
(22) Anmeldetag: 28.03.2009
(51) Int. Cl.: B62D 15/02, B60W 30/06

(54) **VERFAHREN UND VORRICHTUNG ZUR UNTERSTÜTZUNG EINES FAHRES EINES FAHRZEUGS BEIM AUSPARKEN AUS EINER PARKLÜCKE**
METHOD AND DEVICE FOR SUPPORTING A DRIVER OF A VEHICLE DURING THE PROCESS OF LEAVING A PARKING SPACE
PROCÉDÉ ET DISPOSITIF D'ASSISTANCE AU CONDUCTEUR D'UN VÉHICULE AUTOMOBILE LORS DE LA SORTIE D'UNE PLACE DE STATIONNEMENT

(30) Priorität: 03.04.2008 DE 102008017030; 27.05.2008 DE 102008025219
(43) Veröffentlichungstag der Anmeldung: 08.12.2010
(73) Patentinhaber: Valeo Schalter und Sensoren GmbH, 74321 Bietigheim-Bissingen (DE)
(72) Erfinder: BAMMERT, Jens, 70178 Stuttgart (DE); JECKER, Nicolas, 73730 Esslingen (DE); KOSSMANN, Simon, 71287 Weissach (DE); VOVKUSCHEVSKY, Vsevolod, 74321 Bietigheim-Bissingen (DE); HOFFSOMMER, Klaus, 74321 Bietigheim-Bissingen (DE)
(86) Internationale Anmeldenummer: PCT/EP2009/002287
(87) Internationale Veröffentlichungsnummer: WO 2009/121534

(56) Entgegenhaltungen:
- DE-A1- 4 333 112
- DE-A1-102005 058 498

## Beschreibung

### Stand der Technik

Die Erfindung betrifft ein Verfahren und eine Vorrichtung zur Unterstützung eines Fahrers eines Fahrzeugs beim Ausparken aus einer Parklücke gemäß dem Oberbegriff des Anspruchs 1 bzw. des Anspruchs 24.

Bekannte Fahrassistenzvorrichtungen zur Unterstützung eines Fahrers eines Fahrzeugs beim Einparken, im Folgenden kurz als Einparksysteme bezeichnet, helfen dem Fahrer aktiv in eine Parklücke längs zu einer Fahrbahn einzuparken. Dabei vermißt das Einparksystem mit seitlich am Fahrzeug angebrachten Sensoren eine mögliche Parklücke, berechnet aus den Lückendaten eine Einparktrajektorie und steuert das Fahrzeug durch aktiven Lenkeingriff in die Parklücke. Während des Einparkvorgangs bzw. beim Einparken wird die Distanz zu die Parklücke begrenzenden Objekten durch Ultraschallsensoren (Ultrasonic Park Assist Sensoren; UPA-Sensoren) überwacht.

Durch Einparksysteme können Fahrzeuge in sehr kleine Parklücken längs zur Fahrbahn geparkt werden. Dadurch wird der Ausparkvorgang erschwert, vor allem wenn sich beispielsweise durch einen Wechsel von die Parklücke vorn und/oder hinten begrenzenden Fahrzeugen während der Parkdauer die Parklückenlänge verkürzt hat.

Aus der DE 10 2005 058 468 A1 ein Verfahren zum Ausparken eines Fahrzeugs aus einer Parklücke gemäß dem Oberbegriff des Anspruchs 1 bekannt, bei dem die Parklücke mittels Sensoren vermessen wird und anhand der durch die Vermessung ermittelten Daten eine Ausparktrajektorie ermittelt wird. Dem Fahrer werden dann auf einem Bildschirm entsprechende Fahrhinweise angezeigt, um das Fahrzeug kollisionsfrei aus der Parklücke auszuparken. Die Lenkbewegungen müssen dabei aber vorn Fahrer selbst vorgenommen werden.

Als eine Aufgabe der Erfindung kann es deshalb angesehen werden, ein Verfahren und eine Vorrichtung zur Unterstützung eines Fahrers eines Fahrzeugs beim Ausparken eines Fahrzeugs aus einer seitlichen Parklücke längs zu einer Fahrbahn dahingehend zu verbessern, dass die Unterstützung für den Fahrer verbessert ist.

### Offenbarung der Erfindung

Die Nachteile des Standes der Technik werden bei einem erfindungsgemäßen Verfahren zur Unterstützung eines Fahrers eines Fahrzeugs beim Ausparken aus einer seitlichen Parklücke längs zu einer Fahrbahn dadurch vermieden, indem in einem ersten Verfahrensschritt das Verfahren beispielsweise durch Aktivierung eines Ausparksystems bzw. einer Fahrassistenzvorrichtung gestartet wird, wenn aus einer Parklücke längs zu einer Fahrbahn ausgeparkt werden soll. Anschließend erfolgt in einem zweiten Verfahrensschritt eine Vermessung der Parklückenlänge, beispielsweise indem das Ausparksystem mit Hilfe von UPA-Sensoren die Abstände zu die Parklücke vorn und hinten begrenzenden Objekten vermisst und daraus die vorhandene Parklückenlänge ermittelt. Mit Hilfe der vorderen UPA-Sensoren ist auch eine Ermittlung bzw. Abschätzung der Breite des die Parklücke nach vorn begrenzenden Objekts möglich, aus der die vordere Parklückentiefe gewonnen werden kann. Ist die Breitenabschätzung nicht möglich, wird vorzugsweise eine Standardbreite bzw. Standard-Parklückentiefe angenommen. Außerdem kann aus den Abstandsinformationen der UPA-Sensoren zu einem die Parklücke nach vorn bzw. nach hinten begrenzenden Objekt die Schrägstellung des Fahrzeugs zu den die Parklücke begrenzenden Objekten ermittelt werden. Durch zusätzliche Sensoren oder anhand von noch vorn Einparkvorgang bekannter Informationen ist es darüber hinaus möglich, den Abstand des Fahrzeugs zu einem die Parklücke seitlich begrenzenden Objekt, beispielsweise zu einer Bordsteinkante zu ermitteln. In einem dritten
Verfahrensschritt wird zumindest aus den gewonnenen Informationen über die Parklückenlänge, vorzugsweise jedoch zusätzlich auch aus den Informationen über die Parklückentiefe und/oder die Schrägstellung des Fahrzeugs und/oder dem eventuell vorhandenen Abstand des Fahrzeugs zu einem die Parklücke seitlich begrenzenden Objekt, eine Ermittlung einer optimalen Ausparkstrategie durch Berechnung einer Ausparktrajektorie aus den durch die Vermessung gewonnenen Daten durchgeführt. Diese optimale Ausparkstrategie wird vorzugsweise durch eine beispielsweise einen oder mehrere gerade und/oder kreisbogenförmige Abschnitte aufweisende Ausparktrajektorie verwirklicht, welche vorzugsweise eine minimale Anzahl von durch die einzelnen Abschnitte gebildeten geraden und/oder kreisbogenförmigen Vorwärts- und/oder Rückwärtszügen, kurz Ausparkzügen, benötigt. Dabei kann gleichzeitig festgestellt werden, ob ein Ausparkvorgang überhaupt möglich ist. Anschließend erfolgt in einem vierten Verfahrensschritt der Start des Ausparkvorgangs beispielsweise durch Ausgabe eines entsprechenden Signals an den Fahrer des Fahrzeugs, dass eine Ausparktrajektorie berechnet ist und vorliegt. In einem fünften Verfahrensschritt findet eine Durchführung des Ausparkvorganges unter gleichzeitiger Kollisionsverhütung durch Überwachung des Abstandes zu zumindest die Parklücke begrenzenden Objekten statt. Dabei kann die Möglichkeit bestehen, dass der Fahrer beispielsweise durch einen Lenkeinschlag bzw. durch Vorgabe eines Lenkwinkels die Fahrtrichtung des ersten Ausparkzugs erzwingt. In einem solchen Fall wird dann die Ausparktrajektorie neu berechnet bzw. angepasst. Darüber hinaus können die vorderen UPA-Sensoren während des Vorwärtszuges für eine Freisichtprüfung genutzt werden, so dass bei Freisicht, also wenn ein die Parklücke nach vorn begrenzendes Objekt seitlich kollisionsfrei passiert werden kann, der Ausparkvorgang beendet werden kann. Es ist vorgesehen, die Position des Fahrzeugs in der Parklücke zu ermitteln, und die Lenkung des Fahrzeugs automatisch zu steuern. Für das Beschleunigen und Abbremsen des Fahrzeugs und für die Überwachung des fließenden Verkehrs ist vorzugsweise der Fahrer des Fahrzeugs während des gesamten Ausparkvorgangs verantwortlich. In einem sechsten Verfahrensschritt wird das Verfahren beendet, sobald ein kollisionsfreies Verlassen der Parklücke mit einem einzigen verbleibenden Ausparkzug möglich ist. Sobald ein kollisionsfreies Verlassen der Parklücke möglich ist, wird der Fahrer hierüber informiert und der Fahrer übernimmt die Steuerung des Fahrzeugs.

Beim Ausparken wird die Lenkung des Fahrzeugs vorzugsweise automatisch gesteuert, wobei das Verfahren zum automatischen Steuern der Lenkung nur solange erfolgt, bis das Fahrzeug eine Zwischenposition erreicht hat, aus welcher es die Parklücke mit einem verbleibenden Zug, insbesondere Vorwärtszug kollisionsfrei verlassen kann. Anschließend wird der Fahrer über das Erreichen dieser Zwischenposition informiert und die Lenkung zur Betätigung durch den Fahrer freigeben.

Das Fahrzeug fährt bei dem verbleibenden Zug dabei vorzugsweise mit konstantem Lenkwinkel entlang einer Kreisbahn. Der hierzu erforderliche Lenkwinkel kann dabei vor der Freigabe noch automatisch eingestellt werden, indem die Lenkung in der Zwischenstellung noch automatisch in einen Ausfahrstellung gedreht wird, die ein kollisionsfreies Ausfahren aus der Parklücke in einem Zug ermöglicht. Die Ausfahrstellung kann dabei vorzugsweise dem maximalen oder annähernd maximalen Einschlag der Lenkung entsprechen. Alternativ könnte von der Vorrichtung aber auch der kleinste mögliche Lenkeinschlag berechnet und eingestellt werden, der noch ein kollisionsfreies Ausfahren aus der Parklücke in einem Zug ermöglicht.

Die Übergabe der Lenkung an den Fahrer erfolgt somit noch innerhalb der Parklücke, so dass das Fahrzeug bei Ausfahren aus der Parklücke und nachfolgendem Einfädeln in die neben der Parklücke liegenden Fahrbahn vorn Fahrer selbst gelenkt wird. Das Verfahren zum Ausparken kann aber darüber hinaus dazu ausgebildet sein, den Fahrer auch in dieser Phase des Ausparkens zu unterstützen, indem der eingestellte Lenkwinkel und/oder mittels eines Wegsensors und dem Verfahren der Odometrie der zurückgelegte Fahrweg überwacht wird und bei Erkennen einer drohenden Kollision des Fahrzeugs mit einem Hindernis ein entsprechendes Warnsignal an den Fahrer übermittelt wird. Der Ausparkvorgang umfasst somit eine erste Phase, in welcher die Lenkung des Fahrzeugs automatisch betätigt wird und das Fahrzeug in eine Zwischenposition überführt wird, aus welcher ein Ausparken aus der Parklücke mit einem verbleibenden Zug möglich ist, sowie eine daran anschließende zweite Phase, in welcher die Lenkung durch den Fahrer zu betätigen ist, um das Fahrzeug aus der Parklücke herauszubewegen. In dieser zweiten Phase kann der Fahrer durch eine entsprechende Überwachungs- und Warnfunktion unterstützt werden.

Das Fahrzeug kann beim Ausparkvorgang automatisch beschleunigt und/oder abgebremst werden, z. B. durch Eingriff in eine Motorsteuerung oder ein Bremssystem des Fahrzeugs, wobei die automatisches Beschleunigen und/oder Abbremsen nur solange erfolgen, bis das Fahrzeug seine Zwischenposition erreicht hat, aus der ein Verlassen der Parklücke in einem verbleibendem einzigen Zug möglich ist. Somit werden dem Fahrer auch Brems- und Gassteuerung noch innerhalb der Parklücke übergeben.

Eine besonders vorteilhafte Ausgestaltung des erfindungsgemäßen Verfahrens sieht vor, dass die Ausparktrajektorie einen einen ersten und geraden Rückwärtszug bildenden geraden Abschnitt aufweist, an dessen Endposition sich ein erster, das Fahrzeug aus der Parklücke heraus führender, einen ersten Vorwärtszug bildender kreisbogenförmiger Abschnitt anschließt. Hierdurch werden bei dem ersten Rückwärtszug eine Bordsteinkollision und dadurch eine mögliche Schädigung eines Rades oder Reifens des Fahrzeugs vermieden.

Falls keine Bordsteindaten verfügbar sind, beispielsweise weil der Einparkvorgang, der zu einer vorliegenden Parksituation geführt hat, ohne Einparksystem durchgeführt worden ist, werden vorzugsweise Bordsteindaten direkt am Fahrzeug zur Berechnung verwendet, d.h. das Verfahren bzw. die Fahrassistenzvorrichtung gehen bei der Ermittlung der Ausparktrajektorie davon aus, dass das Fahrzeug unmittelbar an einer Bordsteinkante abgestellt worden ist. Vorzugsweise werden zur Ermittlung der Ausparktrajektorie noch von einem Einparkvorgang gespeicherte Bordsteindaten herangezogen.

Gemäß einer vorteilhaften Ausgestaltung der Erfindung wird der Bordstein direkt während des Ausparkvorgangs erkannt und gegebenenfalls die Ausparktrajektorie so korrigiert, dass ein Abfahren der Ausparktrajektorie frei von Kollisionen mit dem Bordstein erfolgt. Vorzugsweise wird bei der Ermittlung der Ausparktrajektorie gleichzeitig festgestellt, ob ein Ausparkvorgang überhaupt möglich ist.

Eine besonders vorteilhafte Ausgestaltung der Erfindung sieht vor, dass bei der Durchführung des Ausparkvorgangs das Fahrzeug durch einen automatischen Lenkeingriff, beispielsweise durch einen aktiven Lenkeingriff einer Fahrassistenzvorrichtung, entlang der Ausparktrajektorie aus der Parklücke manövriert wird.

Eine vorteilhafte Ausgestaltung der Erfindung sieht vor, dass der Fahrer des Fahrzeugs während der Durchführung des Ausparkvorgangs für das Beschleunigen und Abbremsen des Fahrzeugs und die Überwachung des fließenden Verkehrs verantwortlich ist.

Beim Beenden des Verfahrens wird der Fahrer vorzugsweise hierüber informiert und übernimmt die Steuerung des Fahrzeugs.

Um auch aus so kurzen Parklücken auszuparken, deren Länge nicht ausreichen würde bzw. zu klein wäre, um die Diagonale des Fahrzeugs aufzunehmen, kann beim Ausparken ein paralleles Versetzen des Fahrzeugs stattfinden, indem das Fahrzeug in einem oder mehreren abwechselnden Vorwärts- und Rückwärtszügen entlang einzelner S-förmigen Abschnitte der Ausparktrajektorie verfahren wird, bis es eine Zwischenposition einnimmt bzw. erreicht, aus der ein kollisionsfreies Verlassen der Parklücke beispielsweise mit einem einzigen verbleibenden Zug möglich ist. Hierzu wird anschließend an die Vermessung in einem Verfahrensschritt in Abhängigkeit zumindest von der Länge der Parklücke eine mehrzügige, einen oder mehrere S-förmige Abschnitte aufweisende Ausparktrajektorie berechnet, wobei jeder abwechselnd einen Vorwärts- oder Rückwärtszug bildende S-förmige Abschnitt ein in einem vierten Verfahrensschritt entlang der Ausparktrajektorie gesteuertes, die Ausparktrajektorie abfahrendes Fahrzeug in der Parklücke durch jeweils Einlenken und Gegenlenken Stück für Stück parallel in Richtung zur Fahrbahn versetzt. Dies wird dadurch erreicht, dass ein entlang einem S-förmigen Abschnitt gesteuertes Fahrzeug jeweils zu Beginn eines jeden S-förmigen Abschnitts und am Ende eines jeden S-förmigen Abschnitts, also beim Wechsel von jedem Vorwärts- zu jedem Rückwärtszug und umgekehrt, parallel zur Parklücke bzw. zu seiner ursprünglichen Parkposition zum stehen kommt. Das Verfahren wird dann beendet, sobald das Fahrzeug am Ende eines vorzugsweise als Rückwärtszug ausgeführten S-förmigen Abschnitts eine Zwischenposition einnimmt, aus der es vorzugsweise in einem einzigen letzten Zug die Parklücke kollisionsfrei verlassen und in die Fahrbahn einscheren kann. Die Berechnung der einen S-förmigen Abschnitt umfassenden Ausparktrajektorie erfolgt vorzugsweise dann, wenn das Ergebnis der Vermessung ist, dass ein zum Verlassen der Parklücke erforderliches Schrägstellen des Fahrzeugs in der Parklücke unmöglich ist.

Eine vorteilhafte Ausgestaltung des erfindungsgemäßen Verfahrens sieht vor, dass wenn die Vermessung ergibt, dass zumindest die Länge der Parklücke nicht ausreicht bzw. dass die Länge der Parklücke zu klein ist, damit ein Ausparken in einem Zug bzw. in einem Rückwärtszug und einem anschließenden Vorwärtszug nicht möglich ist, in dem Verfahrensschritt eine parallel zur Parkposition versetzte Zwischenposition berechnet wird, aus der ein kollisionsfreies Verlassen der Parklücke beispielsweise mit einem einzigen verbleibenden Zug möglich ist, bzw. aus der das Fahrzeug in vorzugsweise einem Zug ausparken kann, und anschließend eine mehrzügige, S-förmige Abschnitte aufweisende Ausparktrajektorie berechnet wird, welche in einem oder mehreren Zügen unter parallelem Versetzen des Fahrzeugs von der ursprünglichen Parkposition in die Zwischenposition führt.

Vorzugsweise wird die Ausparktrajektorie so berechnet, dass die Zwischenposition mit einem S-förmigen Abschnitt erreicht wird, der als ein letzter Rückwärtszug ausgeführt wird, so dass das endgültige Ausparken in einem Zug vorwärts erfolgen kann.

Eine vorteilhafte Ausgestaltung der Erfindung sieht vor, dass zusätzlich die Breite bzw. Tiefe der Parklücke vermessen wird, bzw. die Position von die Parklücke fahrbahnseitig nach vorn und hinten begrenzenden Objekten. Solche Objekte können z.B. Front und/oder Heck von hinter und/oder vor der Parklücke geparkten Fahrzeugen sein, bzw. deren fahrbahnseitige Ecken. Die Breite bzw. Tiefe der Parklücke wird anschließend bei der Berechnung der Zwischenposition berücksichtigt. Dadurch wird bei der Berechnung der Zwischenposition berücksichtigt, wie weit die Parklücke begrenzende Objekte in die Fahrbahn hineinragen, so dass bei der Berechnung der Zwischenposition die tatsächliche Tiefe der Parklücke in Ausfahrrichtung berücksichtigt werden kann. Steht ein die Parklücke nach vorn begrenzendes, anderes geparkes Fahrzeug z.B. dicht am Bordstein kann so die Zwischenposition früher erreicht werden, als z.B. bei einem weit vorn Bordstein weg geparkten, die Parklücke z.B. nach vorn begrenzenden Fahrzeug.

Ist bei einem Verfahren keine Berechnung der Zwischenposition vorgesehen, so findet vorzugsweise während des Abfahrens der Ausparktrajektorie zumindest in den Endpositionen der S-förmigen Abschnitte jeweils eine Umfelderfassung statt, die dazu dient zu überprüfen, ob das Fahrzeug aus der momentanen Position die Parklücke kollisionsfrei und vorzugsweise in einem einzigen letzten Zug verlassen kann. Die Umfelderfassung dient dabei der Erfassung insbesondere von die Parklücke vor allem nach vorn und/oder nach hinten begrenzenden Objekten z.B. durch Abstandsmessungen mittels z.B. Ultraschall- bzw. UPA-Sensoren. Die Umfelderfassung kann auch ständig während des Abfahrens der Ausparktrajektorie erfolgen.

Dass zwischen dem dritten und dem vierten Verfahrensschritt der Start des Ausparkvorgangs beispielsweise durch Ausgabe eines entsprechenden Signals an den Fahrer des Fahrzeugs, dass eine Ausparktrajektorie berechnet ist und vorliegt, erfolgt.

Dass die Durchführung des Ausparkvorganges unter gleichzeitiger Kollisionsverhütung durch Überwachung des Abstandes zu zumindest die Parklücke begrenzenden Objekten stattfindet.

Eine besonders vorteilhafte Ausgestaltung der Erfindung sieht vor, dass vorzugsweise nach Ausgabe einer Warnung an den Fahrer; dass nunmehr eine Zwischenposition erreicht ist, aus der in einem einzigen letzten Zug die Parklücke kollisionsfrei verlassen werden kann, das Fahrzeug entlang eines diesen letzten Zug ausführenden bzw. beschreibenden Abschnitts der Ausparktrajektorie verfahren wird.

Eine besonders vorteilhafte Ausgestaltung des erfindungsgemäßen Verfahrens sieht vor, dass die Ausparktrajektorie einen ersten und geraden Rückwärtszug bildenden geraden Abschnitt aufweist, an dessen Endposition sich ein erster, das Fahrzeug in der Parklücke parallel seitlich versetzender, einen ersten Vorwärtszug bildender S-förmiger Abschnitt anschließt. Hierdurch werden bei dem ersten Rückwärtszug eine Bordsteinkollision und dadurch eine mögliche Schädigung eines Rades oder Reifens des Fahrzeugs vermieden.

Falls keine Bordsteindaten verfügbar sind, beispielsweise weil der Einparkvorgang, der zu einer vorliegenden Parksituation geführt hat, ohne Einparksystem durchgeführt worden ist, werden vorzugsweise Bordsteindaten direkt am Fahrzeug zur Berechnung verwendet, d.h. das Verfahren bzw. die Fahrassistenzvorrichtung gehen bei der Ermittlung der Ausparktrajektorie davon aus, dass das Fahrzeug unmittelbar an einer Bordsteinkante abgestellt worden ist. Vorzugsweise werden zur Ermittlung der Ausparktrajektorie noch von einem Einparkvorgang gespeicherte Bordsteindaten herangezogen.

Gemäß einer vorteilhaften Ausgestaltung der Erfindung wird der Bordstein direkt während des Abfahrens der Ausparktrajektorie erkannt, und gegebenenfalls die Ausparktrajektorie so korrigiert, dass ein Abfahren der Ausparktrajektorie frei von Kollisionen mit dem Bordstein erfolgt.

Vorzugsweise wird bei der Ermittlung der Ausparktrajektorie gleichzeitig festgestellt, ob ein Abfahren eines S-förmigen Abschnitts einer Ausparktrajektorie überhaupt möglich ist.

Eine besonders vorteilhafte Ausgestaltung der Erfindung sieht vor, dass bei der Durchführung des Ausparkvorgangs das Fahrzeug durch einen automatischen Lenkeingriff, beispielsweise durch einen aktiven Lenkeingriff einer Fahrassistenzvorrichtung, entlang der Ausparktrajektorie aus der ursprünglichen Parkposition in der Parklücke in die Zwischenposition manövriert wird.

Eine vorteilhafte Ausgestaltung der Erfindung sieht vor, dass der Fahrer des Fahrzeugs während der Durchführung des Ausparkvorgangs für das Beschleunigen und Abbremsen des Fahrzeugs und die Überwachung des fließenden Verkehrs verantwortlich ist.

Beim Beenden des Verfahrens wird der Fahrer vorzugsweise hierüber informiert und übernimmt die Steuerung des Fahrzeugs.

Die Erfindung ist insbesondere in Verbindung mit einer Fahrassistenzvorrichtung zur Unterstützung eines Fahrers eines Fahrzeuges beim Ausparken aus einer seitlichen Parklücke längs zu einer Fahrbahn vorteilhaft anwendbar. Eine solche Fahrassistenzvorrichtung umfasst vorzugsweise Mittel zur Vermessung und Erfassung von eine Parklücke begrenzenden Objekten, sowie einen mit den Mitteln verbundenen Mikroprozessor mit zugehörigen Speichermitteln zur Berechnung einer Ausparktrajektorie zum Ausparken eines Fahrzeugs aus der seitlichen Parklücke, sowie Mittel zur Durchführung des Ausparkvorganges. Bei den Mitteln zur Durchführung des Ausparkvorgangs kann es sich beispielsweise um eine geeignete, beispielsweise zum Abfahren der Ausparktrajektorie erforderliche Lenkeinschläge und/oder Fahrbewegungen und/oder Fahrtrichtungen darstellende Anzeige im Armaturenbrett und/oder um Mittel zur Durchführung eines aktiven Lenkeingriffs und/oder um Mittel zur Durchführung aktiver Fahrzeugbewegungen handeln. Die Mittel zur Vermessung und Erfassung von eine Parklücke begrenzenden Objekten überwachen vorzugsweise gleichzeitig den Abstand zu zumindest die Parklücke begrenzenden Objekten während des Ausparkvorgangs zur gleichzeitigen Kollisionsverhütung.

Eine vorteilhafte Anwendung des erfindungsgemäßen Verfahrens ergibt sich in Verbindung mit einer Fahrassistenzvorrichtung, welche ein geführtes Ausparken oder ein halbautomatisches Ausparken, oder ein vollautomatisches Ausparken ermöglicht.

Die Erfindung wird nachfolgend anhand der Zeichnungen erläutert. Dabei zeigen:
- Fig. 1: Eine schematische Darstellung einer ersten Parksituation.
- Fig. 2: Eine schematische Darstellung einer zweiten Parksituation.
- Fig. 3: Eine schematische Darstellung einer dritten Parksituation.
- Fig. 4: Eine schematische Darstellung einer vierten Parksituation.
- Fig. 5: Eine schematische Darstellung einer ersten Ausparkstrategie.
- Fig. 6: Eine schematische Darstellung einer zweiten Ausparkstrategie.
- Fig. 7: Eine schematische Darstellung einer dritten Ausparkstrategie.
- Fig. 8: Eine schematische Darstellung einer vierten Ausparkstrategie.
- Fig. 9: Eine schematische Darstellung einer fünften Ausparkstrategie.

Die Erfindung geht aus von einer im Folgenden kurz als Ausparksystem bezeichneten, ein erfindungsgemäßes Verfahren zur Unterstützung eines Fahrers eines Fahrzeugs 01 beim Ausparken aus einer seitlichen Parklücke 02 längs zu einer Fahrbahn ausführenden Fahrassistenzvorrichtung, welche eine optimale Ausparkstrategie eines zugeparkten Fahrzeugs ermittelt, und den Fahrer des Fahrzeugs 01 beispielsweise durch einen aktiven Lenkeingriff aus der Parklücke 02 manövriert.

Wenn aus einer Parklücke 02 längs zur Fahrbahn ausgeparkt werden soll, wird in einem ersten Verfahrensschritt das Verfahren gestartet, indem das Ausparksystem aktiviert wird.

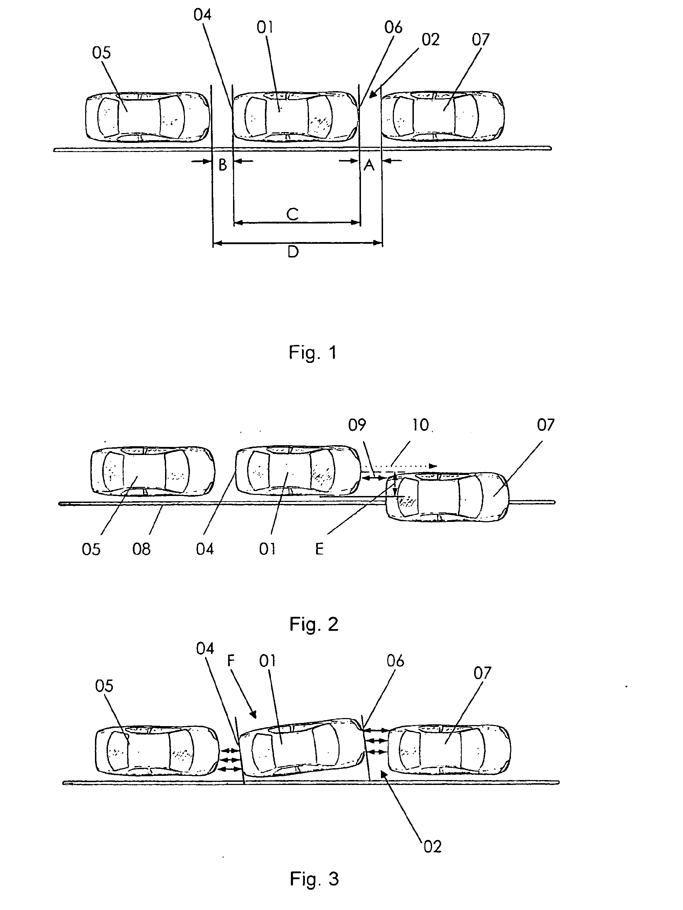

In einem zweiten Verfahrensschritt wird die Länge der Parklücke 02 vermessen, beispielsweise indem das Ausparksystem wie in Fig. 1 dargestellt mit Hilfe von UPA-Sensoren die Abstände A, B zu die Parklücke 02 zu vorn und hinten begrenzenden Objekten 07, 05 vermisst, beispielsweise die Parklücke 02 zu einem nach vorn und nach hinten begrenzend parkenden Fahrzeugs 07, 05, und daraus in Verbindung mit der bekannten Fahrzeuglänge C die vorhandene Parklückenlänge D ermittelt.

Mit Hilfe der vorderen UPA-Sensoren 09, 10 ist auch wie in Fig. 2 dargestellt eine Abschätzung der Breite des die Parklücke nach vorn begrenzenden Objekts 07 möglich, in Fig. 2 einem teilweise auf einem Bordstein 08 abgestelltes Fahrzeug 07, aus der die vordere Parklückentiefe E gewonnen werden kann. In Fig. 2 zeigt ein am Fahrzeugbug 06 auf der Beifahrerseite angeordneter UPA-Sensor 09 einen Abstand zu dem Fahrzeug 07 an, wohingegen der am Fahrzeugbug 06 auf der Fahrbahn zugewandten Seite bzw. Fahrerseite angeordnete UPA-Sensor 10 freie Sicht hat und keinen Abstand anzeigt. Dadurch kann die Parklückentiefe E zumindest grob abgeschätzt werden. Ist die Breitenabschätzung nicht möglich, wird vorzugsweise eine Standardbreite bzw. Standard-Parklückentiefe angenommen.

Außerdem kann wie in Fig. 3 dargestellt aus den Abstandsinformationen unterschiedlicher UPA-Sensoren zu einem die Parklücke 02 nach vorn 07 bzw. nach hinten begrenzenden Objekt 05 die Schrägstellung des Fahrzeugs 01 zu den die Parklücke 02 begrenzenden Objekten 05, 07 ermittelt werden.

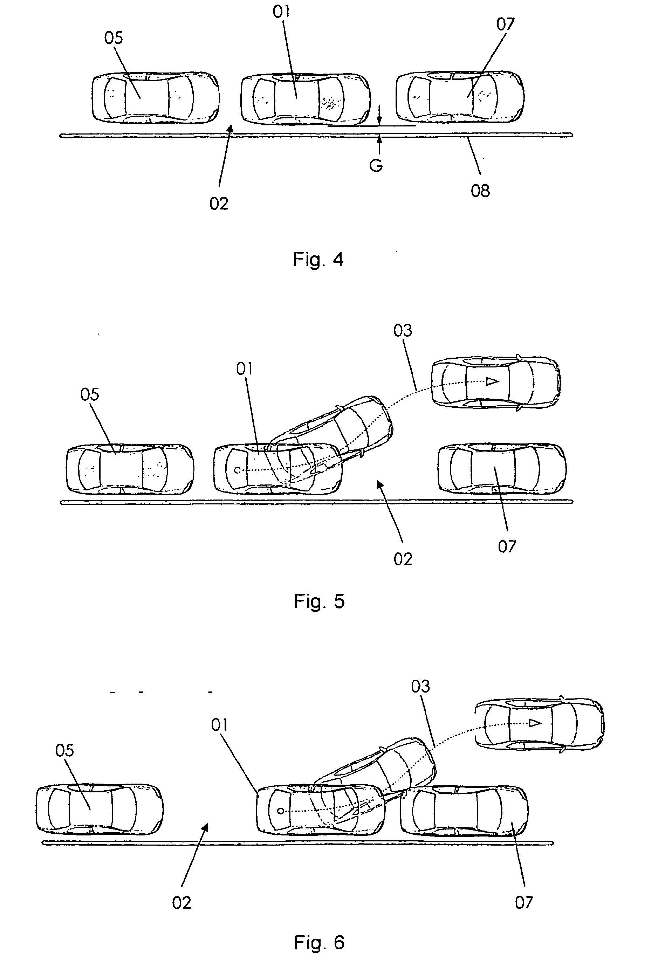

Durch zusätzliche Sensoren oder anhand von noch vom Einparkvorgang bekannter Informationen ist es darüber hinaus möglich, den Abstand des Fahrzeugs 01 zu einem die Parklücke seitlich begrenzenden Objekt 08, beispielsweise zu einer Bordsteinkante 08, zu ermitteln (Fig. 4). Beispielsweise kann durch einen zusätzlichen Sensor mit niedriger Einbauhöhe der Abstand G zur Bordsteinkante 08 ermittelt werden. Falls keine Bordsteindaten verfügbar sind, beispielsweise weil der Einparkvorgang, der zu der vorliegenden Parksituation geführt hat, ohne Einparksystem durchgeführt worden ist, werden vorzugsweise Bordsteindaten direkt am Fahrzeug zur Berechnung verwendet, d.h. das Verfahren bzw. die Fahrassistenzvorrichtung gehen davon aus, dass das Fahrzeug 01 unmittelbar an einer Bordsteinkante 08 abgestellt wurde.

In einem dritten Verfahrensschritt wird zumindest aus den gewonnenen Informationen über die Parklückenlänge D, vorzugsweise jedoch zusätzlich auch aus den Informationen über die Parklückentiefe E und/oder die Schrägstellung F des Fahrzeugs 01 und/oder dem eventuell vorhandenen Abstand G des Fahrzeugs 01 zu einem die Parklücke 02 seitlich begrenzenden Objekt 08, eine Ermittlung einer optimalen Ausparkstrategie durch Berechnung einer Ausparktrajektorie 03 aus den durch die Vermessung gewonnenen Daten durchgeführt (Fig. 5 bis 8). Diese optimale Ausparkstrategie wird vorzugsweise durch eine beispielsweise einen oder mehrere gerade und/oder kreisbogenförmige Abschnitte aufweisende Ausparktrajektorie 03 verwirklicht, welche vorzugsweise eine minimale Anzahl von durch die einzelnen Abschnitte gebildeten geraden und/oder kreisbogenförmigen Vorwärts- und/oder Rückwärtszügen, kurz Ausparkzügen, benötigt. Dabei kann gleichzeitig festgestellt werden, ob ein Ausparkvorgang überhaupt möglich ist.

In einem vierten Verfahrensschritt wird der Ausparkvorgang - sofern ein solcher möglich ist - gestartet. Dies erfolgt beispielsweise durch Ausgabe eines entsprechenden Signals an den Fahrer des Fahrzeugs 01, dass eine Ausparktrajektorie 03 berechnet ist und vorliegt. Dieses Signal kann beispielsweise eine simple Anweisung, beispielsweise zum Lenken in eine bestimmte Richtung und zum Vorwärts- oder Rückwärtsfahren, je nach Parksituation, beispielsweise in Form einer Anzeige im Armaturenbrett, umfassen.

In einem fünften Verfahrensschritt wird der Ausparkvorgang unter gleichzeitiger Kollisionsverhütung durch Überwachung des Abstandes A, B zu zumindest die Parklücke 02 begrenzenden Objekten 07, 05 durchgeführt (Fig. 5 bis 8). Dies geschieht beispielsweise indem das Ausparksystem vorzugsweise aktiv die Lenkung des Fahrzeugs 01 übernimmt und das Ausparksystem gleichzeitig die Abstände B, A bzw. Distanz zu die Parklücke 02 begrenzenden Objekten 05, 07 überwacht. Generell ist auch hier eine Anzeige im Armaturenbrett denkbar, welcher Anzeige der Fahrer Folge zu leisten hat, um der Ausparktrajektorie 03 zu folgen. Dabei kann es vorkommen, dass der Fahrer beispielsweise durch einen Lenkeinschlag bzw. durch Vorgabe eines Lenkwinkels die Fahrtrichtung des ersten Ausparkzugs erzwingt. In einem solchen Fall wird dann die Ausparktrajektorie 03 vorzugsweise neu berechnet bzw. angepasst. Darüber hinaus können die vorderen UPA-Sensoren während des Vorwärtszuges für eine Freisichtprüfung genutzt werden, sodass bei Freisicht, also wenn ein die Parklücke 02 nach vorn begrenzendes Objekt 07 seitlich kollisionsfrei passiert werden kann, der Ausparkvorgang beendet werden kann. Ebenfalls kann vorgesehen sein, die Position des Fahrzeugs 01 in der Parklücke 02 zu ermitteln, und die Lenkung des Fahrzeugs 01 automatisch zu steuern. Alternativ ist denkbar, den Fahrer über die erforderlichen Ausparkzüge durch Fahranweisungen zu informieren.

In einem sechsten Verfahrensschritt wird das Verfahren beendet, sobald ein kollisionsfreies Verlassen der Parklücke 02 beispielsweise mit einem einzigen verbleibenden Ausparkzug möglich ist. Vorzugsweise informiert das Ausparksystem den Fahrer hierüber, woraufhin dieser die Steuerung des Fahrzeugs 01 übernimmt.

Für das Beschleunigen und Abbremsen des Fahrzeugs 01 und der Überwachung des fließenden Verkehrs ist vorzugsweise der Fahrer des Fahrzeugs 01 während des kompletten Ausparkvorgangs verantwortlich.

Die denkbaren Ausparkstrategien sind vorzugsweise von der Parksituation bzw. von der Parklückengeometrie abhängig. Anhand der Fig. 5 bis 9 sind nachfolgend unterschiedliche Ausparkstrategien näher erläutert.

Fig. 5 zeigt eine Parksituation bzw. eine Ausparkstrategie, bei der das Fahrzeug 01 die Parklücke 02 mit einem ersten Vorwärtszug verlassen kann. Das Ausparksystem ermittelt in der in Fig. 5 dargestellten Situation aus der Parklückenlänge D und den Abständen A, B, G eine Ausparkstrategie mit einer Ausparktrajektorie 03, entlang der das Fahrzeug die Parklücke 02 mit einem einzigen Ausparkzug verlassen kann. Der einzige erste Ausparkzug führt dabei mit einem minimal notwendigen Lenkeinschlag entlang der Ausparktrajektorie 03 kollisionsfrei aus der Parklücke 02. Das Ausparksystem lenkt das Fahrzeug auf den minimal nötigen Lenkwinkel, der erforderlich ist, um die Parklücke 02 kollisionsfrei zu verlassen, und informiert den Fahrer über die Beendigung des Ausparkassistenten, sobald der Lenkwinkel erreicht ist.

Fig. 6 zeigt eine Parksituation bzw. eine Ausparkstrategie, bei der das Fahrzeug 01 die Parklücke 02 nicht mit einem ersten Vorwärtszug verlassen kann. Die Parksituation weist einen vergleichsweise kurzen Abstand A zu einem die Parklücke 02 nach vorn begrenzenden Objekt 07 und einen vergleichsweise großen Abstand B zu einem die Parklücke 02 nach hinten begrenzenden Objekt 05 auf. In dieser Parksituation kann das Fahrzeug 01 die Parklücke 02 erst in einem sich an einen ersten Rückwärtszug anschließenden Vorwärtszug verlassen. Das Ausparksystem ermittelt hierbei aus der Parklückenlänge und den Abständen zu den die Parklücke 02 begrenzenden Objekten 05, 07 eine Ausparkstrategie mit einer zweizügigen bzw. zwei Abschnitte aufweisenden Ausparktrajektorie 03, sodass die Parklücke in zwei Ausparkzügen verlassen werden kann. Der erste, als Rückwärtszug ausgeführte Ausparkzug führt dabei entlang des ersten, in Fig. 6 nicht dargestellten Abschnitts der Ausparktrajektorie 03 geradeaus zurück, bis zu einem Abstand zu dem die Parklücke 02 nach hinten begrenzenden Objekt 05, bei dem am Fahrzeugheck 04 angeordnete UPA-Sensoren eine Warnung vor Unterschreiten eines Mindestabstandes beispielsweise durch Ausgabe eines Dauertons anzeigen. Ein sich daran anschließender zweiter, als Vorwärtszug ausgeführter Ausparkzug führt mit dem minimal benötigten Lenkwinkel aus der Parklücke 02. Bei dem Vorwärtszug lenkt das Ausparksystem das Fahrzeug auf den minimal nötigen Lenkwinkel, der erforderlich ist, um die Parklücke 02 kollisionsfrei zu verlassen, und informiert den Fahrer über die Beendigung des Ausparkassistenten, sobald der Lenkwinkel erreicht ist.

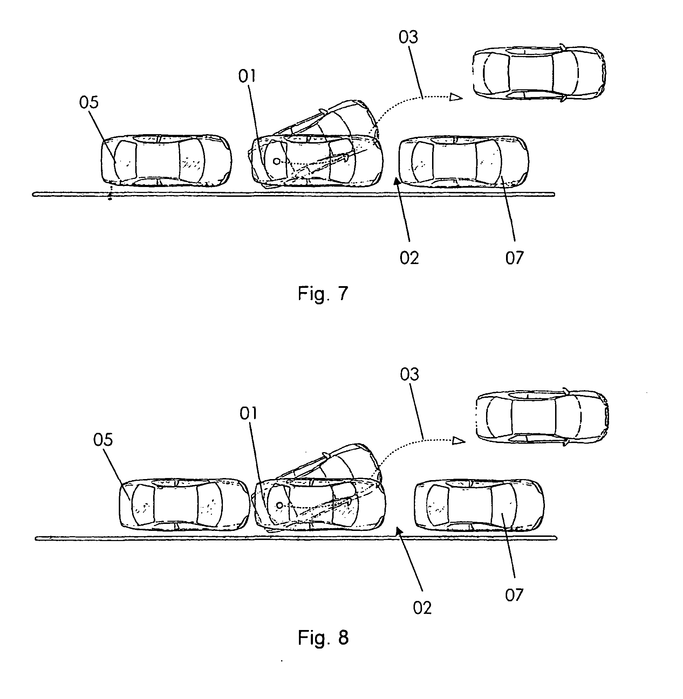

Fig. 7 zeigt eine Parksituation bzw. eine Ausparkstrategie, bei der das Fahrzeug 01 die Parklücke 02 weder mit einem ersten Vorwärtszug, noch mit einem Vorwärtszug nach einem ersten Rückwärtszug verlassen kann. Die Parksituation weist einen kurzen Abstand A zu einem die Parklücke 02 nach vorn begrenzenden Objekt 07 und einen allenfalls etwas größeren Abstand B zu einem die Parklücke 02 nach hinten begrenzenden Objekt 05 auf. In dieser Parksituation kann das Fahrzeug 01 die Parklücke 02 weder in einem ersten Vorwärtszug, noch in einem sich unmittelbar an einen ersten Rückwärtszug anschließenden Vorwärtszug verlassen. Das Ausparksystem ermittelt hierbei aus der Parklückenlänge und den Abständen zu den die Parklücke 02 begrenzenden Objekten 05, 07 eine Ausparkstrategie mit einer mehrzügigen bzw. N Abschnitte aufweisenden Ausparktrajektorie 03, sodass die Parklücke in N Ausparkzügen verlassen werden kann. Der erste, als Rückwärtszug ausgeführte Ausparkzug führt dabei entlang des ersten, in Fig. 7 nicht dargestellten Abschnitts der Ausparktrajektorie 03 mit maximalem Rechtseinschlag der Lenkung kreisbogenförmig zurück, bis zu einem Abstand zu dem die Parklücke 02 nach hinten begrenzenden Objekt 05, bei dem am Fahrzeugheck 04 angeordnete UPA-Sensoren eine Warnung vor Unterschreiten eines Mindestabstandes beispielsweise durch Ausgabe eines Dauertons anzeigen. Ein sich daran anschließender zweiter, als Vorwärtszug ausgeführter Ausparkzug führt mit maximalem Linkseinschlag der Lenkung kreisbogenförmig nach vorn, bis zu einem Abstand zu dem die Parklücke 02 nach vorn begrenzenden Objekt 07, bei dem am Fahrzeugbug 06 angeordnete UPA-Sensoren eine Warnung vor Unterschreiten eines Mindestabstandes beispielsweise durch Ausgabe eines Dauertons anzeigen. Die beiden Ausparkzüge werden so oft wiederholt, bis ein kollisionsfreies Verlassen der Parklücke 02 in einem letzten Vorwärtszug mit minimalem Lenkwinkel der Lenkung möglich ist. Dadurch erfährt das Fahrzeug 01 mit jedem Rückwärts- und Vorwärtszug eine zunehmende Schrägstellung in der Parklücke 02, bis hin zu einer Schrägstellung, aus der ein Verlassen der Parklücke 02 in einem letzten Vorwärtszug möglich ist. Bei diesem letzten Vorwärtszug lenkt das Ausparksystem das Fahrzeug auf den minimal nötigen Lenkwinkel, der erforderlich ist, um die Parklücke 02 kollisionsfrei zu verlassen, und informiert den Fahrer über die Beendigung des Ausparkassistenten, sobald der Lenkwinkel erreicht ist.

Fig. 8 zeigt eine Parksituation bzw. eine Ausparkstrategie, bei der das Fahrzeug 01 die Parklücke 02 weder mit einem ersten Vorwärtszug, noch mit einem Vorwärtszug nach einem ersten Rückwärtszug verlassen kann. Die Parksituation weist einen vergleichsweise großen Abstand A zu einem die Parklücke 02 nach vorn begrenzenden Objekt 07 und einen kurzen Abstand B zu einem die Parklücke 02 nach hinten begrenzenden Objekt 05 auf. In dieser Parksituation kann das Fahrzeug 01 die Parklücke 02 weder in einem ersten Vorwärtszug, noch in einem sich unmittelbar an einen ersten Rückwärtszug anschließenden Vorwärtszug verlassen. Das Ausparksystem ermittelt hierbei aus der Parklückenlänge und den Abständen zu den die Parklücke 02 begrenzenden Objekten 05, 07 eine Ausparkstrategie mit einer mehrzügigen bzw. N Abschnitte aufweisenden Ausparktrajektorie 03, sodass die Parklücke in N Ausparkzügen verlassen werden kann. Der erste, als Vorwärtszug ausgeführte Ausparkzug führt dabei entlang des ersten, in Fig. 8 nicht dargestellten Abschnitts der Ausparktrajektorie 03 mit maximalem Linkseinschlag der Lenkung kreisbogenförmig nach vorn, bis zu einem Abstand zu dem die Parklücke 02 nach vorn begrenzenden Objekt 07, bei dem am Fahrzeugbug 06 angeordnete UPA-Sensoren eine Warnung vor Unterschreiten eines Mindestabstandes beispielsweise durch Ausgabe eines Dauertons anzeigen. Ein sich daran anschließender zweiter, als Rückwärtszug ausgeführter Ausparkzug führt mit maximalem Rechtseinschlag der Lenkung kreisbogenförmig nach hinten, bis zu einem Abstand zu dem die Parklücke 02 nach hinten begrenzenden Objekt 05, bei dem am Fahrzeugheck 04 angeordnete UPA-Sensoren eine Warnung vor Unterschreiten eines Mindestabstandes beispielsweise durch Ausgabe eines Dauertons anzeigen. Die beiden Ausparkzüge werden so oft wiederholt, bis ein kollisionsfreies Verlassen der Parklücke 02 in einem letzten Vorwärtszug mit minimalem Lenkwinkel der Lenkung möglich ist. Dadurch erfährt das Fahrzeug 01 mit jedem Vorwärts- und Rückwärtszug eine zunehmende Schrägstellung in der Parklücke 02, bis hin zu einer Schrägstellung, aus der ein Verlassen der Parklücke 02 in einem letzten Vorwärtszug möglich ist. Bei diesem letzten Vorwärtszug lenkt das Ausparksystem das Fahrzeug auf den minimal nötigen Lenkwinkel, der erforderlich ist, um die Parklücke 02 kollisionsfrei zu verlassen, und informiert den Fahrer über die Beendigung des Ausparkassistenten, sobald der Lenkwinkel erreicht ist.

Wichtig ist hervorzuheben, dass die Abstandswarnung bei Unterschreiten eines bestimmten Sicherheitsmindestabstandes zu einem anderen Objekt, Gegenstand oder Fahrzeug 05, 07 ausgegeben wird.

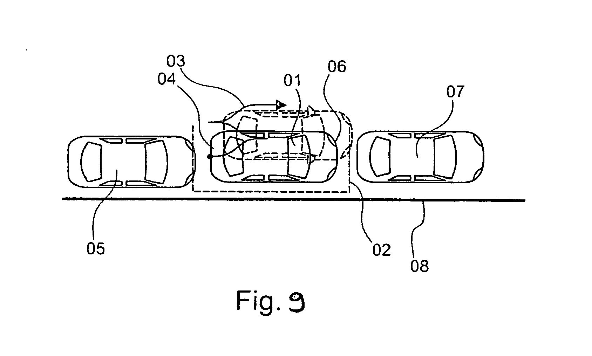

Die Fig. 9 zeigt eine schematische Darstellung einer Ausparksituation aus einer kurzen seitlichen Parklücke, in welcher Ausparksituation ein paralleles seitliches Versetzen entlang einer mehrzügigen, mehrere S-förmige Abschnitte aufweisenden Ausparktrajektorie erforderlich ist, um eine Zwischenposition zu erreichen, aus der ein kollisionsfreies Verlassen der Parklücke mit einem einzigen verbleibenden Zug möglich ist.

Die Erfindung geht aus von einer im Folgenden kurz als Ausparksystem bezeichneten, ein erfindungsgemäßes Verfahren zur Unterstützung eines Fahrers eines Fahrzeugs 01 beim Ausparken aus einer seitlichen Parklücke 02 längs zu einer Fahrbahn ausführenden Fahrassistenzvorrichtung, welche eine Ausparkstrategie eines zugeparkten Fahrzeugs ermittelt, und den Fahrer des Fahrzeugs 01 beispielsweise durch einen aktiven Lenkeingriff aus der Parklücke 02 manövriert. Wenn aus einer seitlichen, längs zu einer Fahrbahn liegenden Parklücke 02 ausgeparkt werden soll, wird in einem ersten Verfahrensschritt das Verfahren gestartet, indem das Ausparksystem aktiviert wird.

In einem zweiten Verfahrensschritt wird die Länge der Parklücke 02 vermessen, beispielsweise indem das Ausparksystem mit Hilfe von UPA-Sensoren die vorhandene Länge der Parklücke 02 vermißt. Ist das Ergebnis der Vermessung, dass die Parklücke 02 in der das Fahrzeug 01 in seiner Parkposition steht beispielsweise durch einen Wechsel von die Parklücke 02 nach vorn und/oder hinten begrenzenden parkenden Fahrzeugen 05, 07 nunmehr derart zu kurz ist, dass ein zum Verlassen der Parklücke 02 erforderliches Schrägstellen des Fahrzeugs 01 in der Parklücke 02 unmöglich ist, welches Schrägstellen z.B. für ein einfaches Ausparken z.B. mit nur einem geraden oder kreisbogenförmigen Rückwärtszug und einem kreisbogenförmigen Vorwärtszug erforderlich wäre, wird in einem dritten Verfahrensschritt aus den durch die Vermessung gewonnenen Parklückendaten sowie vorzugsweise aus noch von einem Einparkvorgang gespeicherten Bordsteindaten eine mindestens einen S-förmigen Abschnitt aufweisenden Ausparktrajektorie 03 berechnet, wobei jeder abwechselnd einen Vorwärts- oder Rückwärtszug bildende S-förmige Abschnitt ein entlang der Ausparktrajektorie 03 gesteuertes Fahrzeug 01 in der Parklücke 02 parallel in Richtung zur Fahrbahn versetzt, indem das Fahrzeug 01 jeweils zu Beginn eines jeden S-förmigen Abschnitts und am Ende eines jeden S-förmigen Abschnitts parallel zur Parklücke 01 bzw. zu seiner ursprünglichen Parkposition zum stehen kommt. Vorzugsweise wird dabei gleichzeitig festgestellt, ob ein Abfahren eines S-förmigen Abschnitts einer Ausparktrajektorie 03 überhaupt möglich ist. Falls keine Bordsteindaten verfügbar sind, beispielsweise weil der Einparkvorgang, der zu der vorliegenden Parksituation geführt hat, ohne Einparksystem durchgeführt worden ist, werden vorzugsweise Bordsteindaten direkt am Fahrzeug 01 zur Berechnung verwendet, d.h. das Verfahren bzw. die Fahrassistenzvorrichtung gehen davon aus, dass das Fahrzeug 01 unmittelbar an einer Bordsteinkante 08 abgestellt wurde.

In einem vierten Verfahrensschritt findet ein paralleles Versetzen des Fahrzeugs 01 durch Abfahren der Ausparktrajektorie 03 statt. Das Abfahren wird beispielsweise durch Ausgabe eines entsprechenden Signals an den Fahrer des Fahrzeugs 01 gestartet, sobald eine Ausparktrajektorie 03 berechnet ist und vorliegt. Dieses Signal kann beispielsweise eine simple Anweisung, beispielsweise zum Vorwärts- oder Rückwärtsfahren, je nach Parksituation, beispielsweise in Form einer Anzeige im Armaturenbrett, umfassen.

Anschließend wird das Abfahren unter gleichzeitiger Kollisionsverhütung durchgeführt. Dies geschieht beispielsweise indem das Ausparksystem vorzugsweise aktiv die Lenkung des Fahrzeugs 01 übernimmt und das Ausparksystem gleichzeitig die Abstände bzw. Distanz zu die Parklücke 02 begrenzenden Objekten 05, 07 überwacht. Generell ist auch hier eine Anzeige im Armaturenbrett denkbar, welcher Anzeige der Fahrer Folge zu leisten hat, um der Ausparktrajektorie 03 zu folgen.

In einem fünften Verfahrensschritt wird das Verfahren beendet sobald das Fahrzeug 01 eine Zwischenposition einnimmt bzw. erreicht, aus der ein kollisionsfreies Verlassen der Parklücke 02 vorzugsweise in nur noch einem einzigen Zug möglich ist. Vorzugsweise informiert das Ausparksystem den Fahrer hierüber, woraufhin dieser die Steuerung des Fahrzeugs 01 übernimmt. Das Verfahren wird ebenfalls beendet, wenn das Ergebnis der Vermessung ist, dass ein zum Verlassen der Parklücke 02 erforderliches Schrägstellen des Fahrzeugs 01 in der Parklücke 02 möglich ist.

Für das Beschleunigen und Abbremsen des Fahrzeugs 01 und der Überwachung des fließenden Verkehrs ist vorzugsweise der Fahrer des Fahrzeugs 01 während des kompletten Ausparkvorgangs verantwortlich. Durch zusätzliche Sensoren am Fahrzeug 01 kann der Bordstein 08 bzw. die Bordsteinkante 08 direkt während des Ausparkvorgangs erkannt werden. Ebenfalls ist denkbar, bei einem Einparkvorgang gewonnene Bordsteindaten zu speichern.

Ein erfindungsgemäßes Verfahren ausführendes Ausparksystem ermittelt bei der in Fig. 9 dargestellten Situation einer kleinen Parklücke 02 eine Ausparktrajektorie 03, so dass die Parklücke 02 nach N Zügen bzw. durch N Rangierzüge verlassen werden kann. Der erste Zug kann beispielsweise gerade zurück führen, bis beispielsweise am Fahrzeugheck 04 angeordnete UPA-Sensoren eine beispielsweise durch einen Dauerton angegebene Abstandswarnung zu einem die Parklücke 02 nach hinten begrenzenden Gegenstand, Objekt oder Fahrzeug 05 ausgeben. Durch das Geradeauszurückfahren wird darüber hinaus eine Berührung mit dem Bordstein 08 vermieden. Der zweite Zug führt mit vollem Linkseinschlag der Lenkung bzw. mit vollem Einlenken bis zum Umlenkpunkt des ersten S-förmigen Abschnitts der Ausparktrajektorie 03 und danach mit vollem Rechtseinschlag der Lenkung bzw. mit vollem Gegenlenken bis beispielsweise am Fahrzeugbug 06 angeordnete UPA-Sensoren eine beispielsweise durch einen Dauerton angegebene Abstandswarnung zu einem die Parklücke 02 nach vorn begrenzenden Gegenstand, Objekt oder Fahrzeug 07 ausgeben. Nach Abfahren des S-förmigen Abschnitts steht das Fahrzeug 01 wieder parallel zu der ursprünglichen Parkposition in der Parklücke 02. Der dritte Zug führt wiederum rückwärts, wobei das Ausparksystem beim dritten Zug Lenkbewegungen ausführen kann, da aufgrund der vorherigen Fahrzeugbewegung des zweiten Zuges eine Bordsteinberührung ausgeschlossen werden kann. Somit führt der dritte Zug entlang des zweiten S-förmigen Abschnitts der Ausparktrajektorie 03. Der dritte Zug wird wiederum bis zur Ausgabe einer Abstandswarnung ausgeführt. Nach dem dritten Zug werden der zweite und dritte Zug so lange bzw. so oft wiederholt, bis eine Zwischenposition erreicht ist, aus der ein kollisionsfreies Verlassen der Parklücke 02 mit einem letzten Zug möglich ist. Ab erreichen der Zwischenposition wird das Ausparksystem deaktiviert und der Fahrer darüber informiert, beispielsweise durch einen Warnton, eine Anzeige in einem Display oder durch das Aufleuchten oder Erlöschen einer Lampe.

Wichtig ist hervorzuheben, dass die Abstandswarnung bei Unterschreiten eines bestimmten Sicherheitsmindestabstandes zu einem anderen Objekt, Gegenstand oder Fahrzeug 05, 07 ausgegeben wird.

## Patentansprüche

1. Verfahren zur Unterstützung eines Fahrers eines Fahrzeugs (01) beim Ausparken aus einer seitlichen Parklücke (02) längs zu einer Fahrbahn, mit den Vertahrensschritten:
- Start des Verfahrens, wenn aus einer Parklücke (02) längs zu einer Fahrbahn ausgeparkt werden soll;
- Vermessung zumindest der Länge (D) der Parklücke (02);
- Ermittlung einer Ausparktrajektorie (03) zumindest anhand der durch die Vermessung gewonnenen Daten;
- Start des Ausparkvorgangs;
- Durchführung des Ausparkvorganges unter gleichzeitiger Kollisionsverhütung durch Überwachung des Abstandes zu zumindest die Parklücke (02) begrenzenden Objekten (05, 07, 08);
**dadurch gekennzeichnet, dass**
das Verfahren beendet wird, sobald ein kollisionsfreies Verlassen der Parklücke (02) möglich ist, wobei bei Durchführung des Ausparkvorganges die Lenkung des Fahrzeugs (01) automatisch gesteuert wird und die automatische Steuerung der Lenkung beendet wird, wenn das Fahrzeug (01) eine Zwischenposition erreicht hat, aus welcher es die Parklücke (02) mit einem einzigen Zug verlassen kann.

2. Verfahren nach Anspruch 1, **dadurch gekennzeichnet, dass** bei Erreichen der Zwischenposition die Lenkung automatisch in eine Ausfahrstellung gedreht wird, mit welcher ein kollisionsfreies Verlassen der Parklücke (02) möglich ist.

3. Verfahren nach Anspruch 1 oder 2, **dadurch gekennzeichnet, dass** nach dem Erreichen der Zwischenposition beim Ausparken aus der Parklücke der eingestellte Lenkwinkel und/oder zurückgelegte Fahrweg überwacht wird und bei Erkennen einer drohenden Kollision des Fahrzeugs mit den die Parklücke (02) begrenzenden Objekten (05, 07, 08) ein entsprechendes Warnsignal an den Fahrer übermittelt wird.

4. Verfahren nach Anspruch 1, **dadurch gekennzeichnet, dass** das Fahrzeug (01) beim Ausparkvorgang automatisch beschleunigt und/oder abgebremst wird, wobei das automatische Beschleunigen und/oder Abbremsen beendet wird, wenn das Fahrzeug (01) eine Zwischenposition erreicht hat, aus welcher es die Parklücke (02) mit einem einzigen Zug verlassen kann.

5. Verfahren nach einem der vorhergehenden Ansprüche, **dadurch gekennzeichnet, dass** zusätzlich die vordere Parklückentiefe (E) ermittelt und bei der Ermittlung der Ausparktrajektorie (03) berücksichtigt wird.

6. Verfahren nach einem der vorhergehenden Ansprüche, **dadurch gekennzeichnet, dass** zusätzlich die Schrägstellung (F) des Fahrzeugs (01) in der Parklücke (02) ermittelt und bei der Ermittlung der Ausparktrajektorie (03) berücksichtigt wird.

7. Verfahren nach einem der vorhergehenden Ansprüche, **dadurch gekennzeichnet, dass** zusätzlich der Abstand des Fahrzeugs (01) zu einem die Parklücke (02) seitlich begrenzenden Objekt (08) ermittelt und bei der Ermittlung der Ausparktrajektorie (03) berücksichtigt wird.

8. Verfahren nach einem der vorhergehenden Ansprüche, **dadurch gekennzeichnet, dass** zur Ermittlung der Ausparktrajektorie (03) noch von einem Einparkvorgang gespeicherte Bordsteindaten herangezogen werden.

9. Verfahren nach einem der vorhergehenden Ansprüche, **dadurch gekennzeichnet, dass** der Bordstein (08) direkt während des Ausparkvorgangs erkannt und die Ausparktrajektorie (03) gegebenenfalls so korrigiert wird, dass ein Abfahren der Ausparktrajektorie (03) frei von Kollisionen mit dem Bordstein (08) erfolgt.

10. Verfahren nach einem der vorhergehenden Ansprüche, **dadurch gekennzeichnet, dass** die Ausparktrajektorie (03) neu ermittelt wird, wenn der Fahrer durch einen Lenkeinschlag und/oder durch eine Gangwahl die Fahrtrichtung des ersten Ausparkzugs erzwingt.

11. Verfahren nach einem der vorhergehenden Ansprüche, **dadurch gekennzeichnet, dass** zumindest während jedes Vorwärtszuges eine Freisichtprüfung stattfindet, und bei Freisicht, wenn ein die Parklücke (02) nach vorn begrenzendes Objekt (07) seitlich kollisionsfrei passiert werden kann, der Ausparkvorgang beendet wird.

12. Verfahren nach einem der vorhergehenden Ansprüche, **dadurch gekennzeichnet, dass** beim Beenden des Verfahrens der Fahrer hierüber informiert wird, woraufhin dieser die Steuerung des Fahrzeugs (01) übernimmt.

13. Verfahren nach einem der vorhergehenden Ansprüche, **dadurch gekennzeichnet, dass** die Ausparktrajektorie mehrere kreisbogenförmige Vorwärts- und Rückwärtszüge vorsieht, wodurch das Fahrzeug (01) in der Parklücke (02) eine zunehmende Schrägstellung erfährt, bis ein kollisionsfreies Verlassen der Parklücke (02) in einem letzten Vorwärtszug durchführbar ist bzw. durchgeführt wird.

14. Verfahren nach einem der vorhergehenden Ansprüche, **dadurch gekennzeichnet, dass** ein erster Ausparkzug als gerade nach hinten führender Rückwärtszug ausgeführt ist, an den sich ein oder mehrere kreisbogenförmige Vorwärts- und Rückwärtszüge anschließen.

15. Verfahren nach einem der Ansprüche 1 bis 13, **gekennzeichnet, durch** die Verfahrensschritte:
Berechnung einer mindestens einen S-förmigen Abschnitt aufweisenden Ausparktrajektorie (03) in Abhängigkeit zumindest von der Länge der Parklücke (02), wobei jeder abwechselnd einen Vorwärts- oder Rückwärtszug bildende S-förmige Abschnitt ein entlang der Ausparktrajektorie (03) gesteuertes Fahrzeug (01) in der Parklücke (02) parallel in Richtung zur Fahrbahn versetzt, indem das Fahrzeug (01) jeweils zu Beginn eines jeden S-förmigen Abschnitts und am Ende eines jeden S-förmigen Abschnitts parallel zur Parklücke (01) bzw. zu seiner ursprünglichen Parkposition zum stehen kommt, und paralleles Versetzen des Fahrzeugs (01) **durch** Abfahren der Ausparktrajektorie (03).

16. Verfahren nach Anspruch 15, **dadurch gekennzeichnet, dass** die einen S-förmigen Abschnitt aufweisenden Ausparktrajektorie (03) dann berechnet wird, wenn das Ergebnis der Vermessung ist, dass ein zum Verlassen der Parklücke (02) erforderliches Schrägstellen des Fahrzeugs (01) in der Parklücke (02) unmöglich ist

17. Verfahren nach Anspruch 15, **dadurch gekennzeichnet, dass** die Ausparktrajektorie (03) so berechnet, dass die Zwischenposition mit einem S-förmigen Abschnitt erreicht wird, der als ein letzter Rückwärtszug ausgeführt wird, so dass das endgültige Ausparken in einem Vorwärtszug erfolgen kann.

18. Verfahren nach Anspruch 15, **dadurch gekennzeichnet, dass** während des Abfahrens der Ausparktrajektorie (03) zumindest in den Endpositionen der S-förmigen Abschnitte jeweils eine Umfelderfassung stattfindet, um zu überprüfen, ob das Fahrzeug (01) bereits eine Zwischenposition erreicht hat, aus der die Parklücke (02) kollisionsfrei verlassen werden kann.

19. Verfahren nach einem der Ansprüche 15 - 18, **dadurch gekennzeichnet, dass** die Ausparktrajektorie (03) einen ersten und geraden Rückwärtszug bildenden geraden Abschnitt aufweist, an dessen Endposition sich ein erster, das Fahrzeug (01) in der Parklücke (02) parallel seitlich versetzender, einen ersten Vorwärtszug bildender S-förmiger Abschnitt anschließt.

20. Verfahren nach einem der Ansprüche 15-19, **dadurch gekennzeichnet, dass** bei der Ermittlung der Ausparktrajektorie (13) gleichzeitig festgestellt wird, ob ein Abfahren eines S-förmigen Abschnitts möglich ist.

## Claims

1. Method for assisting a driver of a vehicle (01) when exiting a lateral parking space (02) in a longitudinal direction with respect to a carriageway, having the steps:
- starting of the method when a parking space (02) is to be exited in a longitudinal direction with respect to a carriageway;
- measurement of at least the length (D) of the parking space (02);
- determination of a parking-space-exiting trajectory (03) at least on the basis of the data acquired by the measurement;
- starting of the parking-space-exiting process;
- execution of the parking-space-exiting process with simultaneous collision prevention by monitoring the distance from objects (05, 07, 08) which at least bound the parking space (02);
**characterized in that**
the method is ended as soon as collision-free exiting of the parking space (02) is possible, wherein when the parking-space-exiting process is executed the steering of the vehicle (01) is automatically controlled and the automatic control of the steering is ended when the vehicle (01) has reached an intermediate position from which it can exit the parking space (02) with a single movement.

2. Method according to Claim 1, **characterized in that** when the intermediate position is reached, the steering is automatically turned into an exiting position with which collision-free exiting of the parking space (02) is possible.

3. Method according to Claim 1 or 2, **characterized in that** after the intermediate position is reached during the exiting from the parking space, the steering angle which has been set and/or the distance which has been travelled are/is monitored, and when an imminent collision of the vehicle with the objects (05, 07, 08) which bound the parking space (02) is detected, a corresponding warning signal is transmitted to the driver.

4. Method according to Claim 1, **characterized in that** during the parking-space-exiting process the vehicle (01) is automatically accelerated and/or braked, wherein the automatic acceleration and/or braking are/is ended when the vehicle (01) has reached an intermediate position from which it can exit the parking space (02) with a single movement.

5. Method according to one of the preceding claims, **characterized in that** in addition the front depth (E) of the parking space is determined and is taken into account in the determination of the parking-space-exiting trajectory (03).

6. Method according to one of the preceding claims, **characterized in that** in addition the oblique position (F) of the vehicle (01) in the parking space (02) is determined and is taken into account in the determination of the parking-space-exiting trajectory (03).

7. Method according to one of the preceding claims, **characterized in that** in addition the distance of the vehicle (01) from an object (08) which laterally bounds the parking space (02) is determined and taken into account in the determination of the parking-space-exiting trajectory (03).

8. Method according to one of the preceding claims, **characterized in that** kerb data, which are still stored from a parking process, are used to determine the parking-space-exiting trajectory (03).

9. Method according to one of the preceding claims, **characterized in that** the kerb (08) is detected directly during the parking-space-exiting trajectory, and the parking-space-exiting trajectory (03) is, if appropriate, corrected in such a way that the parking-space-exiting trajectory (03) is travelled along free of collisions with the kerb (08).

10. Method according to one of the preceding claims, **characterized in that** the parking-space-exiting trajectory (03) is re-determined if the driver forcibly brings about the direction of travel of the first parking-space-exiting movement by means of a steering lock and/or by means of a change of gearspeed.

11. Method according to one of the preceding claims, **characterized in that** unobstructed view checking takes place at least during each forward movement, and in the case of an unobstructed view when an object (07) which bounds the parking space (02) towards the front can be passed laterally without a collision, the parking-space-exiting process is ended.

12. Method according to one of the preceding claims, **characterized in that**, when the method ends, the driver is informed of this, after which the driver assumes control of the vehicle (01).

13. Method according to one of the preceding claims, **characterized in that** the parking-space-exiting trajectory provides a plurality of circular-arc-shaped forward and reverse movements, as a result of which the vehicle (01) adopts an increasingly oblique position in the parking space (02) until collision-free exiting of the parking space (02) can be carried out or is carried out in a last forward movement.

14. Method according to one of the preceding claims, **characterized in that** a first parking-space-exiting movement is carried out as a reverse movement which leads straight towards the rear and which is adjoined by one or more circular-arc-shaped forward and reverse movements.

15. Method according to one of Claims 1 to 13 **characterized by** the method steps:
Calculation of a parking-space-exiting trajectory (03) which has at least one S-shaped section, as a function at least of the length of the parking space (02), wherein each S-shaped section which alternately forms a forward movement or a reverse movement positions a vehicle (01), which has been steered along the parking-space-exiting trajectory (03), parallel to the direction of the carriageway in the parking space (02), by virtue of the fact that at the start of each S-shaped section and at the end of each S-shaped section the vehicle (01) respectively comes to a standstill parallel to the parking space (02) and/or to its original parked position; and parallel positioning of the vehicle (01) by travelling along the parking-space-exiting trajectory (03).

16. Method according to Claim 15, **characterized in that** the parking-space-exiting trajectory (03) which has an S-shaped section is calculated when the result of the measurement is that oblique positioning of the vehicle (01) in the parking space (02), which is necessary to exit the parking space (02), is impossible.

17. Method according to Claim 15, **characterized in that** the parking-space-exiting trajectory (03) is calculated in such a way that the intermediate position is reached with an S-shaped section which is carried out as a last reverse movement, with the result that the ultimate exiting from the parking space can take place in a forward movement.

18. Method according to Claim 15, **characterized in that**, during the movement along the parking-space-exiting trajectory (03), sensing of the surroundings respectively takes place at least in the end positions of the S-shaped sections, in order to check whether the vehicle (01) has already reached an intermediate position from which the parking space (02) can be exited without a collision.

19. Method according to one of Claims 15-18, **characterized in that** the parking-space-exiting trajectory (03) has a straight section which forms a first and straight reverse movement, and whose end position is adjoined by a first S-shaped section which positions the vehicle (01) laterally in parallel in the parking space (02) and forms a first forward movement.

20. Method according to one of Claims 15-19, **characterized in that**, during the determination of the parking-space-exiting trajectory (03) it is simultaneously determined whether it is possible to travel along an S-shaped section.

## Revendications

1. Procédé pour assister un conducteur d'un véhicule (01) lors de la sortie de stationnement hors d'un emplacement de stationnement latéral (02) longitudinalement par rapport à une voie de circulation, comprenant les étapes de procédé suivantes :
- début du procédé lorsque l'on doit sortir hors d'un emplacement de stationnement (02) longitudinalement par rapport à une voie de circulation ;
- mesure d'au moins la longueur (D) de l'emplacement de stationnement (02) ;
- détermination d'une trajectoire de sortie de stationnement (03) au moins au moyen des données obtenues par le biais de la mesure ;
- début de l'opération de sortie de stationnement ;
- exécution de l'opération de sortie de stationnement en évitant simultanément une collision par le biais d'une surveillance de la distance à au moins des objets (05, 07, 08) délimitant l'emplacement de stationnement (02) ;
**caractérisé en ce que**
le procédé s'achève dès qu'il est possible de quitter l'emplacement de stationnement (02) sans collision, la direction du véhicule (01) étant commandée de manière automatique lors de l'exécution de l'opération de sortie de stationnement et la commande automatique de la direction s'achevant lorsque le véhicule (01) a atteint une position intermédiaire à partir de laquelle il peut quitter l'emplacement de stationnement (02) en une seule manoeuvre.

2. Procédé selon la revendication 1, **caractérisé en ce que**, lorsque la position intermédiaire est atteinte, la direction est automatiquement tournée de manière à se trouver dans une position de sortie grâce à laquelle il est possible de quitter l'emplacement de stationnement (02) sans collision.

3. Procédé selon la revendication 1 ou 2, **caractérisé en ce qu'**après que la position intermédiaire a été atteinte lors de la sortie de stationnement hors de l'emplacement de stationnement, l'angle de direction réglé et/ou le trajet parcouru sont surveillés, et, lors de la détection d'une collision imminente du véhicule avec les objets (05, 07, 08) délimitant l'emplacement de stationnement (02), un signal d'avertissement correspondant est communiqué au conducteur.

4. Procédé selon la revendication 1, **caractérisé en ce que**, lors de l'opération de sortie de stationnement, le véhicule (01) est accéléré et/ou ralenti automatiquement, l'accélération et/ou le ralentissement automatiques s'achevant lorsque le véhicule (01) a atteint une position intermédiaire à partir de laquelle il peut quitter l'emplacement de stationnement (02) en une seule manoeuvre.

5. Procédé selon l'une quelconque des revendications précédentes, **caractérisé en ce qu'**en outre la profondeur de l'espace de stationnement à l'avant (E) est déterminée, et la trajectoire de sortie de stationnement (03) est prise en compte lors de la détermination.

6. Procédé selon l'une quelconque des revendications précédentes, **caractérisé en ce qu'**en outre l'obliquité (F) du véhicule (01) dans l'emplacement de stationnement (02) est déterminée, et la trajectoire de sortie de stationnement (03) est prise en compte lors de la détermination.

7. Procédé selon l'une quelconque des revendications précédentes, **caractérisé en ce qu'**en outre la distance du véhicule (01) à un objet (08) délimitant latéralement l'emplacement de stationnement (02) est déterminée, et la trajectoire de sortie de stationnement (03) est prise en compte lors de la détermination.

8. Procédé selon l'une quelconque des revendications précédentes, **caractérisé en ce que** des données de bordure de trottoir déjà mémorisées lors d'une opération de stationnement sont utilisées pour la détermination de la trajectoire de sortie de stationnement (03).

9. Procédé selon l'une quelconque des revendications précédentes, **caractérisé en ce que** la bordure de trottoir (08) est détectée directement pendant l'opération de sortie de stationnement, et la trajectoire de sortie de stationnement (03) est éventuellement corrigée de telle sorte qu'un parcours de la trajectoire de sortie de stationnement (03) s'effectue sans collision avec la bordure de trottoir (08).

10. Procédé selon l'une quelconque des revendications précédentes, **caractérisé en ce que** la trajectoire de sortie de stationnement (03) est à nouveau déterminée lorsque le conducteur impose la direction de déplacement de la première manoeuvre de sortie de stationnement par le biais d'un braquage et/ou par le biais d'une sélection de rapport de vitesse.

11. Procédé selon l'une quelconque des revendications précédentes, **caractérisé en ce qu'**au moins pendant chaque manoeuvre de marche avant un contrôle pour vérifier si la visibilité est entravée a lieu, et si la visibilité n'est pas entravée, lorsqu'un objet (07) délimitant l'emplacement de stationnement (02) vers l'avant peut être dépassé latéralement sans collision, l'opération de sortie de stationnement s'achève.

12. Procédé selon l'une quelconque des revendications précédentes, **caractérisé en ce qu'**à la fin du procédé le conducteur est informé à ce sujet, après quoi ce dernier reprend en charge le guidage du véhicule (01).

13. Procédé selon l'une quelconque des revendications précédentes, **caractérisé en ce que** la trajectoire de sortie de stationnement comporte plusieurs manoeuvres de marche avant et de marche arrière en arc de cercle, moyennant quoi le véhicule (01) subit une obliquité croissante dans l'emplacement de stationnement (02) jusqu'à ce que l'emplacement de stationnement (02) soit ou puisse être quitté sans collision en une dernière manoeuvre de marche avant.

14. Procédé selon l'une quelconque des revendications précédentes, **caractérisé en ce qu'**une première manoeuvre de sortie de stationnement est réalisée en tant que manoeuvre de marche arrière menant de manière rectiligne vers l'arrière, suite à laquelle ont lieu une ou plusieurs manoeuvres de marche avant et de marche arrière en arc de cercle.

15. Procédé selon l'une quelconque des revendications 1 à 13, **caractérisé par** les étapes de procédé suivantes :
calcul d'une trajectoire de sortie de stationnement (03) comprenant au moins une section en forme de S en fonction d'au moins la longueur de l'emplacement de stationnement (02), chaque section en forme de S formant tour à tour une manoeuvre de marche avant ou de marche arrière déplaçant un véhicule (01), guidé le long de la trajectoire de sortie de stationnement (03), dans l'emplacement de stationnement (02) parallèlement dans la direction de la voie de circulation, en ce que le véhicule (01), à chaque fois au commencement de chaque section en forme de S et à la fin de chaque section en forme de S, s'arrête parallèlement à l'emplacement de stationnement (02) ou à sa position de stationnement initiale, et déplacement parallèle du véhicule (01) par le biais du parcours de la trajectoire de sortie de stationnement (03).

16. Procédé selon la revendication 15, **caractérisé en ce que** la trajectoire de sortie de stationnement (03) comprenant une section en forme de S est calculée lorsque le résultat de la mesure est qu'une obliquité du véhicule (01) dans l'emplacement de stationnement (02), nécessaire pour quitter l'emplacement de stationnement (02), est impossible.

17. Procédé selon la revendication 15, **caractérisé en ce que** la trajectoire de sortie de stationnement (03) est calculée de telle sorte que la position intermédiaire soit atteinte à l'aide d'une section en forme de S qui est réalisée en tant que dernière manoeuvre de marche arrière, de telle sorte que la sortie de stationnement définitive puisse être effectuée en une manoeuvre de marche avant.

18. Procédé selon la revendication 15, **caractérisé en ce que** pendant le parcours de la trajectoire de sortie de stationnement (03), au moins aux positions d'extrémité des sections en forme de S, une détection de l'environnement a lieu à chaque fois pour contrôler si le véhicule (01) a déjà atteint une position intermédiaire à partir de laquelle l'emplacement de stationnement (02) peut être quitté sans collision.

19. Procédé selon l'une quelconque des revendications 15 à 18, **caractérisé en ce que** la trajectoire de sortie de stationnement (03) comprend une section rectiligne formant une première manoeuvre de marche arrière rectiligne, dont la position finale est suivie d'une première section en forme de S formant une première manoeuvre de marche avant et déplaçant parallèlement de manière latérale le véhicule (01) dans l'emplacement de stationnement (02).

20. Procédé selon l'une quelconque des revendications 15 à 19, **caractérisé en ce que**, lors de la détermination de la trajectoire de sortie de stationnement (03), on établit simultanément si un parcours d'une section en forme de S est possible.
